# EUROPEAN PATENT APPLICATION

(11) **EP 1 491 423 A2**
(43) Date of publication of application: **29.12.2004**
(21) Application number: 04014783.7
(22) Date of filing: 24.06.2004
(51) Int. Cl.: B62B 7/14

(54) **Engagement/release device particularly for the frame of a stroller or the like**

(30) Priority: 25.06.2003 IT MI20031293
(71) Applicant: CAM IL MONDO DEL BAMBINO S.p.A., I-24060 Telgate (Prov. of Bergamo) (IT)
(72) Inventor: Rho, Gianfranco, 24060 Telgate (Prov. of Bergamo) (IT)
(74) Representative: Modiano, Guido, Dr.-Ing.

(57) **Abstract**

An engagement/release device particularly for frames of prams, strollers and the like, comprising, on a frame (1), pairs of opposite receptacles (2) that can be detachably engaged by engagement pins (5) connected to the element to be associated with the frame. The particularity of the invention consists in that it comprises, at the receptacles (2), at least two engagement sliders (10), which are pushed by elastic means (15) in order to retain the corresponding engagement pin in the corresponding receptacle and to slide in contrast with the elastic means during the insertion of the pins in the receptacles. Buttons (20) are further provided for the translational motion of the sliders (10) so as to disengage from the pins (5). At least one of the sliders has a retention element (31) designed to retain the corresponding slider (10) in the position for releasing the pin (5) until the pin is extracted from the receptacle (2).

## Description

The present invention relates to an engagement/disengagement device particularly for frames of prams, strollers and the like.

As is known, there is an enduring trend to use a single supporting frame to which the various components are applied so as to provide a stroller, a pram, and so forth.

To replace the components, it is necessary to have a device for engaging/releasing the component to be applied to the frame, which allows to perform engagement and release rapidly and safely.

Conventional solutions have generally proved to be very complicated from a structural standpoint and unable to provide quick replacement.

A prior patent by the same Applicant (patent IT 1277643), assumed included herein by reference, discloses an automatic engagement and release device for strollers that is obtained, in its general aspects, by means of sliders that allow to automatically lock in position the rod-like element that is connected to the component to be connected, making engagement/release quicker and easier.

Although this solution has proved to be very valid from a structural and conceptual standpoint, it has been found to be susceptible of improvements, especially as regards the possibility to provide easy actuation of the sliders.

The aim of the invention is to solve the problem described above by providing an engagement/release device particularly for frames of prams, strollers and the like that allows to actuate the sliders in a particularly practical manner without having to act directly on said sliders, so that actuation is very rapid and efficient.

Within this aim, an object of the invention is to provide a device that allows to increase the number of sliders, thus improving the stability of the coupling, at the same time simplifying the actuation for engagement and release.

Another object of the present invention is to provide an engagement/release device that thanks to its particular constructive characteristics is capable of giving the greatest assurances of reliability and safety in use.

Another object of the present invention is to provide an engagement/release device that can be easily obtained starting from commonly commercially available elements and materials and is further competitive from a merely economical standpoint.

This aim and these and other objects that will become better apparent hereinafter are achieved by an engagement/release device particularly for frames of prams, strollers and the like, according to the invention, which comprises, on a frame, pairs of opposite receptacles that can be detachably engaged by engagement pins connected to the element to be associated with said frame, characterized in that it comprises, at said receptacles, at least two engagement sliders, which are pushed by elastic means in order to retain the corresponding pin in the corresponding receptacle and to slide in contrast with said elastic means during the insertion of said pins in said receptacles, buttons being further provided for the translational motion of said sliders so as to disengage from said pins, at least one of said sliders having a retention element in order to retain the corresponding slider in the position for releasing said pin until the pin is extracted from the receptacle.

Further characteristics and advantages will become better apparent from the description of a preferred but not exclusive embodiment of an engagement/release device particularly for frames of prams, strollers and the like, illustrated by way of nonlimiting example in the accompanying drawings, wherein:

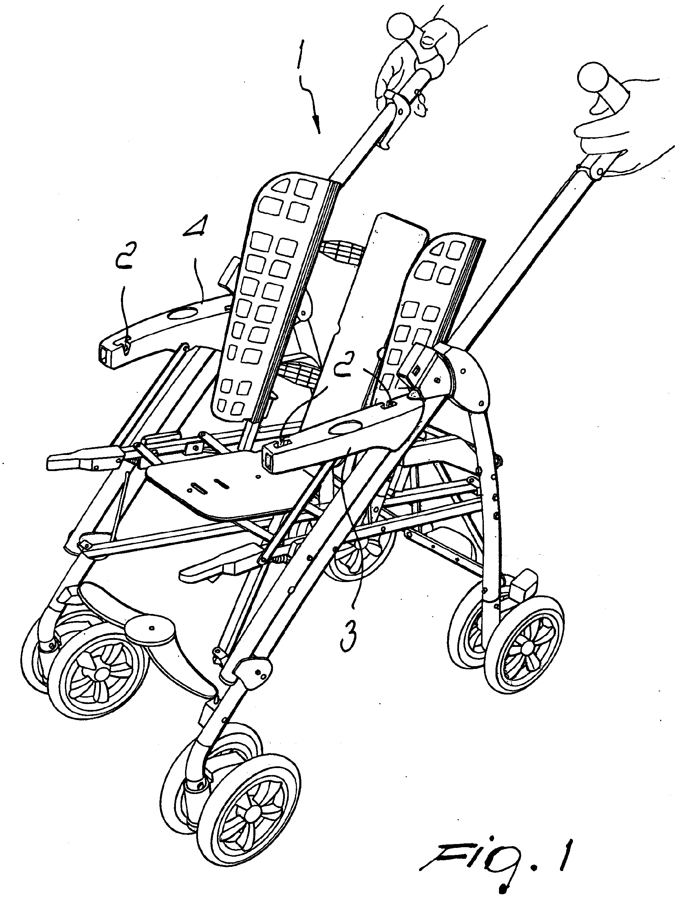

Figure 1 is a schematic perspective view of a frame provided with the receptacles of the engagement/release device;

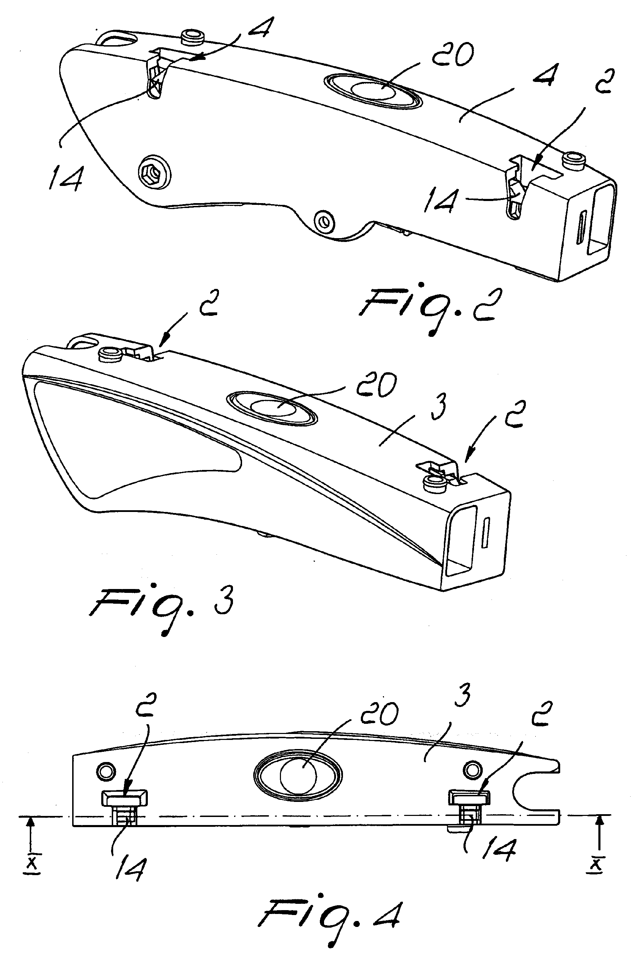

Figure 2 is a perspective view of the receptacles arranged in a right armrest;

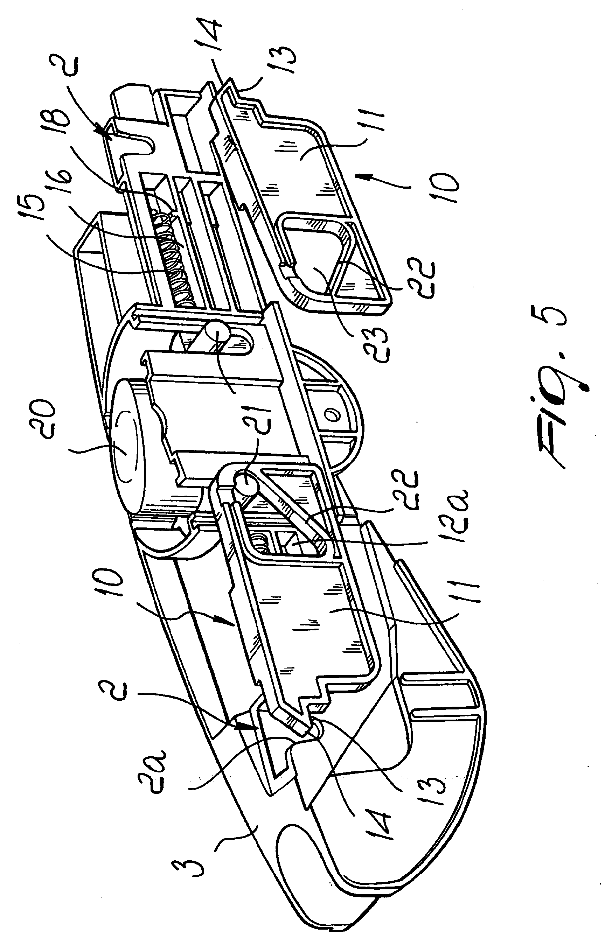

Figure 3 is a perspective view of the receptacles arranged in a left armrest;
Figure 4 is a top plan view of an armrest;
Figure 5 is a schematic and partially cutout perspective view of the engagement/release device arranged in an armrest;

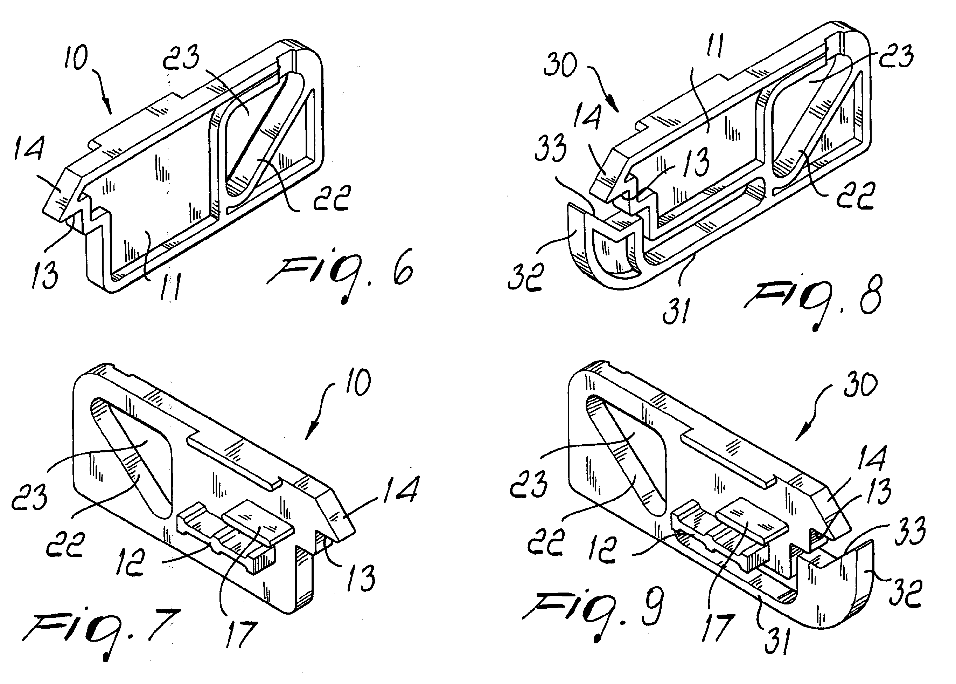

Figure 6 is a perspective view of a slider, taken from one side;
Figure 7 is a perspective view of the slider of Figure 6, taken from the other side;

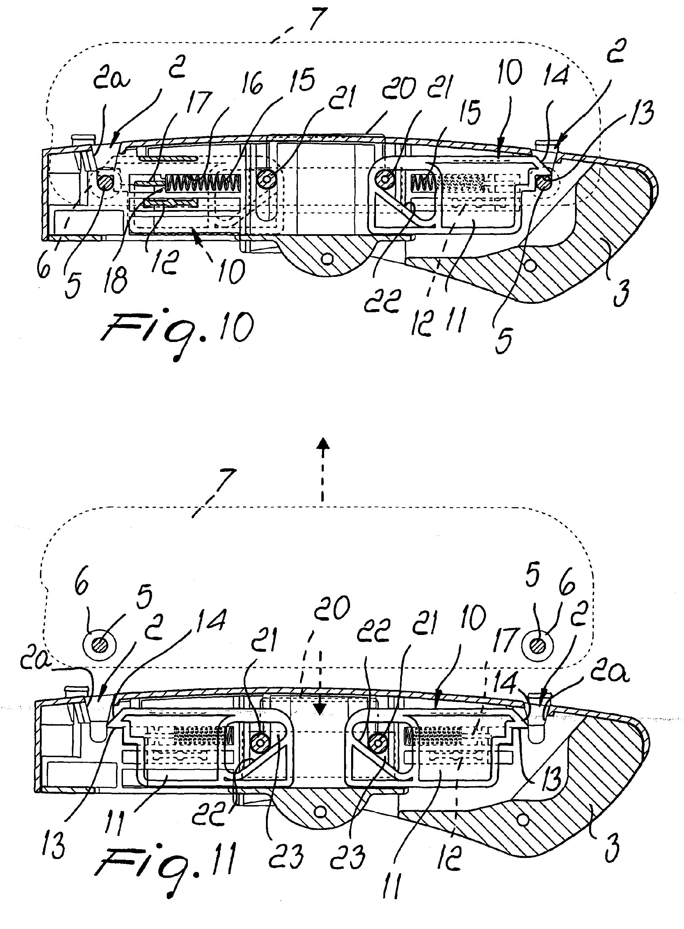

Figure 8 is a perspective view of a slider with a retention element;
Figure 9 is a perspective view of the slider of Figure 8, taken from the other side;
Figure 10 is a sectional view, taken along the line X-X of Figure 4, of the engagement/release device with the sliders in the locking position;

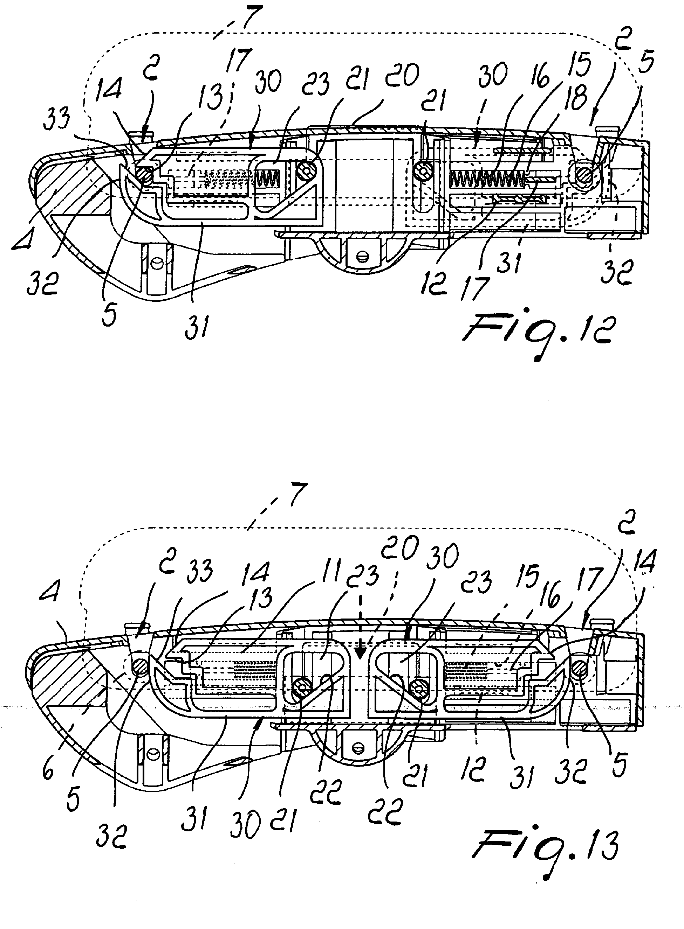

Figure 11 is a view of the engagement/release device with the sliders in the release position;
Figure 12 is a view of the engagement/release device with the sliders with the retention element in the locking position;
Figure 13 is a view of the device with the sliders with the retention element in the release position.

With reference to the figures, the engagement/release device particularly for frames of prams, strollers and the like, comprises, on a frame for prams, strollers and the like, generally designated by the reference numeral 1, two opposite receptacles 2, which are advantageously provided in the left armrest 3 and in the right armrest 4 of the frame.

The pins 5 can be detachably inserted in said receptacles 2, advantageously have an enlarged head 6, and protrude at side wings 7 which are rigidly associated with the component to be connected to the frame.

Engagement sliders, generally designated by the reference numeral 10, act at the receptacles 2, which are advantageously shaped so as to have a blind bottom which expands with a flared portion 2a at the upper part; said sliders have a plate-like body 11, which has, on one face, a guiding protrusion 12, which is accommodated so that it can slide in a guiding channel 12a formed inside the corresponding armrest 3 or 4.

Each slider 10 has, at one end, a coupling tooth 13, which can be inserted so as to close the corresponding receptacle 2 and is provided in an upward region with an inclined portion 14.

The sliders are pushed elastically by way of elastic means provided by a helical spring 15, which is accommodated in a cavity 16 formed within the corresponding armrest and engages a tab 17 formed on the face of the plate-like element 11 that is provided with the protrusion 12.

The cavity 16, which is open at the end where the tab 17 is inserted, is provided with shoulders 18, which in practice allow to provide a preloading of the spring 15.

To perform the translational motion of the sliders 10 in contrast with the action of the springs 15, a button 20 is provided, which protrudes upwardly in the corresponding armrest 3 or 4 and can slide in a direction that is substantially perpendicular to the sliding direction of the sliders and is provided with lateral pins 21, which engage an inclined plane 22 formed in a cutout 23 provided on the sliders.

The described coupling causes the translational motion of the button 20 to produce, by way of the engagement of the pins 21 with the inclined planes 22, a corresponding translational motion of the corresponding sliders.

Each button 20 is preset so as to have two pins and actuate simultaneously the two sliders provided on the same side.

To simplify the release operations, at least one slider, designated by the reference numeral 30, is provided on one of the armrests and is provided with a retention element in order to retain the slider in the position for disengagement from the pin until the pin is extracted from the receptacle.

In its general features, the slider 30 is made of the same components as the slider 10, so that the same elements are designated by the same reference numeral.

A retention arm 31 is also provided, which protrudes at the lower edge of the slider 30 and ends with a complementarily shaped tooth 32, which is arranged below and is provided with an inclined portion 33 in the part that is directed toward the tooth 12.

Thanks to this coupling, when the corresponding button 20 is actuated, the translational motion of the slider 30 in practice forces the complementarily shaped tooth to slide below the locking pin 5 and, by rising by way of the elastic action of the arm 31, the complementarily shaped tooth, when the button 20 is released, engages against the pin, keeping the slider in the release position until the pin is extracted from the receptacle.

This allows the person who has to perform the release operation to actuate beforehand the button that actuates the sliders with the retention element, so that they remain in the released position, and to then act on the other button and lift the component with his free hand, with consequent exit of the pins from the receptacles.

The arrangement described above allows to perform engagement automatically, since in order to perform engagement it is sufficient to insert the pins of the component to be coupled in the receptacles 2 so that the pins, by acting on the inclined plane 13, produce a sliding of the sliders, with consequent clearing of the receptacle and passage of the pin and subsequent locking by way of the elastic return of the pin produced by the elastic means 15.

To perform release, it is sufficient to act in the manner described above, by first pressing on the button that actuates the sliders with the retention element, which remain in the release position, and by then pressing the button that releases the other sliders.

It should be stressed that for safety reasons it is preferable to provide sliders having the retention element on a single side, in order to prevent simultaneous actuation of the sliders with retention elements from allowing to uncouple the sliders from the corresponding pins, thus producing an unstable connection.

The use of sliders without a retention element on one side allows them to disengage only when pressure is applied simultaneously.

It is thus evident from what has been described above that the invention achieves the intended aim and objects, and in particular the fact is stressed that an engagement and release device is provided which, by using buttons inserted in the armrests, allows to perform release operations very quickly and to achieve engagement automatically.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application no. MI2003A001293, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An engagement/release device particularly for frames of prams, strollers and the like, comprising, on a frame, pairs of opposite receptacles that can be detachably engaged by engagement pins connected to the element to be associated with said frame, **characterized in that** it comprises, at said receptacles, at least two engagement sliders, which are pushed by elastic means in order to retain the corresponding pin in the corresponding receptacle and to slide in contrast with said elastic means during the insertion of said pins in said receptacles, buttons being further provided for the translational motion of said sliders so as to disengage from said pins, at least one of said sliders having a retention element in order to retain the corresponding slider in the position for releasing said pin until the pin is extracted from the receptacle.

2. The engagement/release device according to claim 1, **characterized in that** at least one of said sliders is not provided with said retention element.

3. The engagement/release device according to the preceding claims, **characterized in that** said pair of receptacles is provided at the left and right armrests of said frame.

4. The engagement/release device according to one or more of the preceding claims, **characterized in that** said pins have an enlarged head.

5. The engagement/release device according to one or more of the preceding claims, **characterized in that** said receptacles are shaped so as to have a blind bottom which widens into a flared portion at the upper part.

6. The engagement/release device according to one or more of the preceding claims, **characterized in that** said sliders comprise a plate-like body which has, on one face, a guiding protrusion that is accommodated so that it can slide in a guiding channel formed correspondingly on said frame.

7. The engagement/release device according to one or more of the preceding claims, **characterized in that** each one of said sliders comprises a coupling tooth, which can be inserted so as to close said corresponding receptacle.

8. The engagement/release device according to one or more of the preceding claims, **characterized in that** said coupling tooth is provided in an upward region with an inclined portion.

9. The engagement/release device according to one or more of the preceding claims, **characterized in that** said elastic means comprise a helical spring, which is accommodated in a cavity formed by said frame and engages a tab that protrudes from said plate-like body of said slider.

10. The engagement/release device according to one or more of the preceding claims, **characterized in that** it comprises, in said cavity, two shoulders that delimit the region for accommodating said spring in preloaded conditions and a space for inserting said tab.

11. The engagement/release device according to one or more of the preceding claims, **characterized in that** it comprises lateral pins, which are rigidly connected to said button and engage an inclined plane formed in a cutout provided in said plate-like body of said sliders in order to impart a translational motion to said sliders along a direction that is substantially perpendicular to the direction of translational motion of said button.

12. The engagement/release device according to one or more of the preceding claims, **characterized in that** each button actuates simultaneously two oppositely arranged sliders.

13. The engagement/release device according to one or more of the preceding claims, **characterized in that** said armrest with retention element is provided with a retention arm, which protrudes at the lower edge of said slider and ends with a complementary tooth, which arranges itself below and is provided with an inclined portion in the part that is directed toward said tooth, said complementary tooth sliding, when the button slides, under the corresponding pin and engaging by abutment against said pin by way of the elastic action of said retention arm.
